# EUROPEAN PATENT SPECIFICATION

(11) **EP 1 597 865 B1**
(45) Date of publication and mention of the grant of the patent: **07.11.2007**
(21) Application number: 04709290.3
(22) Date of filing: 09.02.2004
(51) Int. Cl.: H04L 12/28

(54) **MAINTAINING SYNCHRONIZATION BETWEEN A QOS ACCESS POINT AND QOS STATIONS IN AN IEEE 802.11E WIRELESS LAN**
AUFRECHTERHALTUNG DER SYNCHRONISATION ZWISCHEN EINEM QOS-ZUGRIFFSPUNKT UND QOS-STATIONEN IN EINEM DRAHTLOSEN LAN GEMÄSS IEEE 802.11E
MAINTIEN DE LA SYNCHRONISATION ENTRE UN POINT D'ACCES QOS ET DES STATIONS QOS DANS UN RESEAU LOCAL SANS FIL SELON IEEE 802.11E

(30) Priority: 13.02.2003 US 447180 P; 26.06.2003 US 482655 P
(43) Date of publication of application: 23.11.2005
(73) Proprietor: Koninklijke Philips Electronics N.V., 5621 BA Eindhoven (NL)
(72) Inventor: DEL PRADO PAVON, Javier, Briarcliff Manor, NY 10510-8001 (US)
(74) Representative: Volmer, Georg
(86) International application number: PCT/IB2004/000329
(87) International publication number: WO 2004/073259

(56) References cited:
- EP-A- 1 233 574
- EP-A- 1 237 382
- "Information technology-Telecommunications and information exchange between systems- Local and metropolian area networks-Specific requirements. Part 11: Wireless LAN Medium Access Control (MAC) and Physical Layer (PHY) Specifications. Chapter 9" ISO/IEC 8802-11 ANSI/IEEE STD 802.11, XX, XX, 1999, pages 70-97, XP002236335
- MANGOLD S ET AL: "IEEE 802.11e Wireless LAN for Quality of Service" EUROPEAN WIRELESS 2002, [Online] 26 February 2002 (2002-02-26), pages 1-8, XP002251598 Florence, Italy Retrieved from the Internet: <URL:www.cs.umn.edu/research/networking/se minar/802_11e.pdf> [retrieved on 2003-08-18]

## Description

The present invention relates to communication systems. More particularly, the present invention relates to a system and method for maintaining synchronization between an IEEE 802.11e quality of service capable (QoS-capable) access point (QAP) and non-AP QoS-capable stations (QSTAs), when the non-AP QSTAs are using the schedule element information to go into sleeping mode.

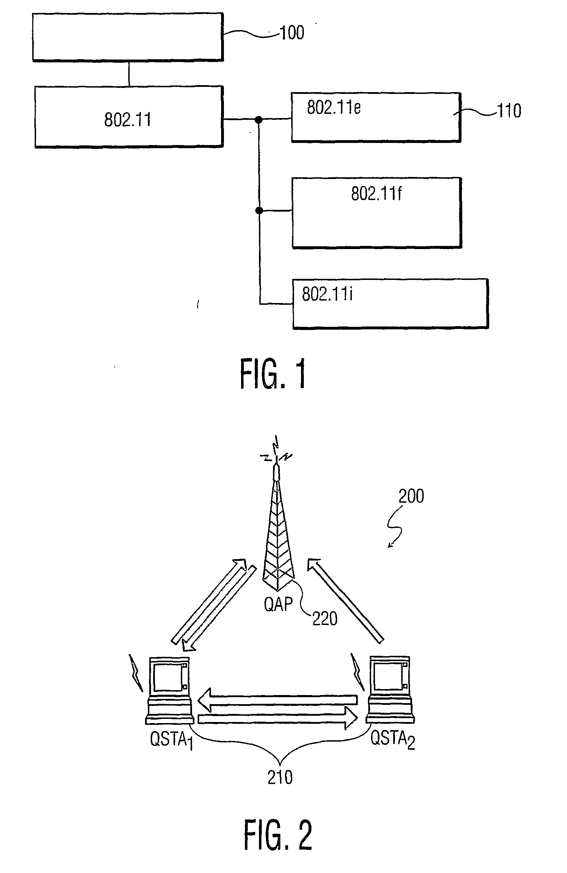

In general, referring to FIG. 1, the IEEE 802.11 wireless local area network (WLAN) standard includes the medium access control (MAC) sub-layer 100 of the Open System Interconnection OSI network reference model. At the MAC layer, IEEE 802.11e 110 delivers quality of service (QoS) support to an IEEE 802.11 WLAN. FIG. 2 illustrates an exemplary QoS basic service set (QBSS) WLAN 200 in which IEEE 802.11e MAC maintains QoS, however IEEE 802.11 WLAN was originally designed for best-effort services and a large number of proposals have been made for QoS enhancement schemes for 802.11 MAC. In FIG. 2 the QoS access point (QAP) 220 implements the access point functionality of the QoS facility of the IEEE 802.11e standard. A QoS basic service set (QBSS) is a basic service set 200, as illustrated in FIG. 2, that supports LAN applications by providing a QoS facility for communication via the wireless medium (WM) as specified in the IEEE 802.11e standard. A QoS station (QSTA) 210 is an IEEE 802.11 station (STA) that implements the QoS facility and hybrid coordination function (HCF), and includes and IEEE 702,11-comformant physical (PHY) interface to the wireless medium (WM).

The proposed or draft QoS enhancement schemes of an 802. 11e wireless local area network (WLAN) can be characterized in several ways, including parameterized QoS. In general, QoS is the ability of a WLAN element to provide a given level of assurance of data delivery. Parameterized QoS is a strict QoS requirement that is expressed in terms of fixed quantitative values, such as data rate. These values are expected to be met within the MAC data service in the transfer of data frames between peer QSTAs.

In general, the Hybrid Coordinator (HC) establishes a Service Schedule for a non-AP QSTA. The Service Schedule is communicated to the non-AP QSTA in a Schedule clement contained in an ADDTS response QoS Action message. The HC can update the Service Schedule at any time by sending a Schedule element in a Schedule QoS Action frame. The updated schedule is in effect when the HC receives the acknowledgement frame for the Schedule QoS Action frame.

A non-AP QSTA cannot directly reject a Service Schedule but can affect the Service Schedule by modifying or deleting its existing Traffic Specifications (TSPECs).

The Schedule element and protocol for parameterized QoS is defined in the IEEE 802.11e draft standard, IEEE 801.11 WG, Draft Supplement to Standard For Telecommunications and Information Exchange Between Systems-LAN/MAN Specific Requirements - Part 11 : Wireless Medium Access Control (MAC) and physical layer (PHY) specifications: Medium Access Control (MAC) Enhancements for Quality of Service (QoS), IEEE 802.11E/Draft 4.0, November 2002. The Schedule element is transmitted from the QAP to the non-AP QSTAs to convey information regarding the QoS schedule assigned to the non-AP QSTA. This information includes time between Service Periods, duration of the Telecommunications and Information Exchange Between Systems-LAN/MAN Specific Requirements - Part 11: Wireless Medium Access Control (MAC) and physical layer (PHY) specifications: Medium Access Control (MAC) Enhancements for Quality of Service (QoS), IEEE 802.11E/Draft 4.0, November 2002.

The Schedule element is transmitted from the QAP to the non-AP QSTAs to convey information regarding the QoS schedule assigned to the non-AP QSTA. This information includes time between Service Periods, duration of the Service Periods, and so on. This information can be used by the non-AP QSTA to save power and to go into sleeping mode when a Service Period is not scheduled.

However, the current mechanism defined in IEEE 802.1 le can become unstable when one of the frames is lost during the Service Period. More specifically, the synchronization between QAP and non-AP QSTAs is lost if the acknowledgement (ACK) frame for the last downlink frame in the Service Period is not received by the QAP.

Accordingly, there is a need for a scheme for maintaining synchronization between, an IEEE 802.112 QAP and non-AP QSTAs, when the non-AP QSTAs are using the Schedule element information to enter sleeping mode.

The Article "Information Technology- Telecommunications and information exchange between systems - Local and metropolitan area networks-Specific requirements. Part 11 : Wireless LAN Medium Access Control (MAC) and Physical Layer (PHY) Specifications. Chapter 9, ISO/IEC 8802-11, ANSI/ IEEE STD 802.11, 1999 describes the functions of the MAC layer. It describes that a station, which is in power save mode needs to transmit a poll frame 10 request data from the AP. The AP will send data, which is acknowledged by the STA. In case of not receiving the ACK in the A.P, the AP will send the data again. The retransmitted data is filtered at the station. Further, it is described that a more fragment bit is set to indicate, whether more data are sent or not. In case of receiving a data stream having such more fragment bit set to zero the station knows that no more data will be sent for the MSDU.

### SUMMARY OF THE INVENTION

The present invention is directed to an approach which enables a non-AP QSTA to maintain synchronization with a QAP and determine when the non-AP QSTA can go to sleep mode.

The object is solved by the features of the independent claims.

According to an aspect of the present invention, if the last downlink data frame is not the single data frame during a Service Period, the non-AP QSTA responds with an ACK frame and remains awake for a distributed coordination function inter-frame space (DIFS) period thereafter and if no frame is received from the QAP during this period, the non-AP QSTA may go to sleep.

According to another aspect of the present invention, if the lest downlink data frame is the first and single frame during a Service Period a scheme is provided for both the QAP and the non-AP QSTA to determine whether or not the Service Period started, and thus both are able to maintain synchronization.

### BRIEF DESCRIPTION OF THE DRAWINGS

A more complete understanding of the method and apparatus of the present invention may be had by reference to the following detailed description when taken in conjunction with the accompanying drawings wherein:
FIG. 1 illustrates the 802.11 MAC layer whereto embodiments of the present invention are to be applied;
FIG. 2 illustrates a communication system whereto embodiments of the present invention are to be applied;
FIG. 3 illustrates a simplified block diagram of a relevant part of a QoS-capable Access Point (QAP) and each non-AP QoS-capable station (QSTA) within a particular QoS basic service set (QBSS) according to an embodiment of the present invention;
FIG. 4 is a flow chart illustrating the operation steps of a QAP and a non-AP OSTA;
FIG. 5 is a flow chart illustrating the operation steps for maintaining synchronization when the last downlink data frame is not the single frame during the Service Period: and.
FIG. 6 is a flow chart illustrating the operations steps for maintaining synchronization when the last downlink data frame is also the first and single frame during the Service Period.

### DETAILED DESCRIPTION OF THE EMBODIMENTS

In the following description, by way of example and not limitation, particular details are provided for a thorough understanding of the present invention, e.g., QAP and QSTA architecture, 802.11e QoS procedures, that are relevant to the embodiments of the present invention. Other components have been omitted because they are well known to those of ordinary skill in the art and also for purposes of simplicity and clarity so as not to obscure the description of the present invention with unnecessary detail.

FIG. 1 illustrates the MAC layer of the 802.11e Specification to which embodiments of the present invention are to e applied.

FIG. 2 illustrates a representative network whereto embodiments of the present invention are to be applied. According to the principle of the present invention, there is provided a protocol for maintaining Service Period synchronization between the QAP and a non-AP QSTA. It should be noted that the network of FIG. 2 is small for the purpose of illustration. It should also be noted that in the basic 802.11 specification, traffic is only allowed between AP and STAs, i.e., STAs cannot send traffic to each other without connection with AP. 802.11e adds capability for QSTAs to send traffic directly to each other in the infrastructure mode, which significantly improves the bandwidth, especially in home networks.

The 802.11e draft standard specifies that power management in an infrastructure network be performed by the medium access control (MAC) sub-layer, see FIG. 1. In the IEEE 802,11e draft, the Schedule Element for parameterized QoS is transmitted from the QAP to the non-AP QSTAs in order to convey information regarding the QoS schedule assigned to the non-AP QSTAs. The non-AP QSTAs can use this information to save power and enter sleep mode when a Service Period is not scheduled.

In the IEEE 802.11e draft it is specified that a Service Period starts with a successful data or QoS (+)CF-Poll transmission by the Hybrid Coordinator (HC). The next Service Period starts no earlier than a Minimum Service Interval (as defined in the Schedule Element) after the last Service Period. During this time the non-AP QSTA can go to sleep mode, thus saving power.

The system and method of the present invention eliminate a problem that can appear in downlink Service Periods. It may happen that an ACK frame sent by a non-AP QSTA as a response to the last downlink data frame (which did not include piggyback poll) in a Service Period is lost (the last frame in the Service Period is indicated by the More Data flag being cleared). In this case, the non-AP QSTA assumes that the Service Period has ended, since it sent the ACK frame corresponding to the last frame in the Service Period, and therefore it may enter into sleep mode. However, the QAP assumes that the Service Period is still on-going since the last Data Frame was not correctly transmitted, and therefore may still retry. This situation can continue until the non-AP QSTA wakes up again.

The situation just described, worsens when there is a single downlink data transmission (with no piggyback poll). For example, the QAP starts a single downlink data transmission Service Period. If the non-AP QSTA receives the data frame correctly and transmits the ACK to the QAP, the non-AP QSTA assumes that the Service Period has started, and since is the single downlink frame, it also assumes that the Service Period has ended. Therefore, after sending the ACK frame the non-AP QSTA may go into sleep mode. However it can happen that the ACK is lost and therefore the QAP assumes that the Service Period didn't start. In this situation, the QAP may retransmit the data frame without success because the non-AP QSTA is in sleep mode. The non-AP QSTA will wake up a "Minimum Service Interval" period after it received the original downlink frame from the QAP. However, now the beginning of the last Service Period will differ in the QAP and non-AP QSTA, and therefore the synchronization between QAP and non-AP QSTA has been lost.

The system and method of the present invention provides two embodiments that solve this problem. Further, it should be noted that the problem just described only appears for downlink transmissions.

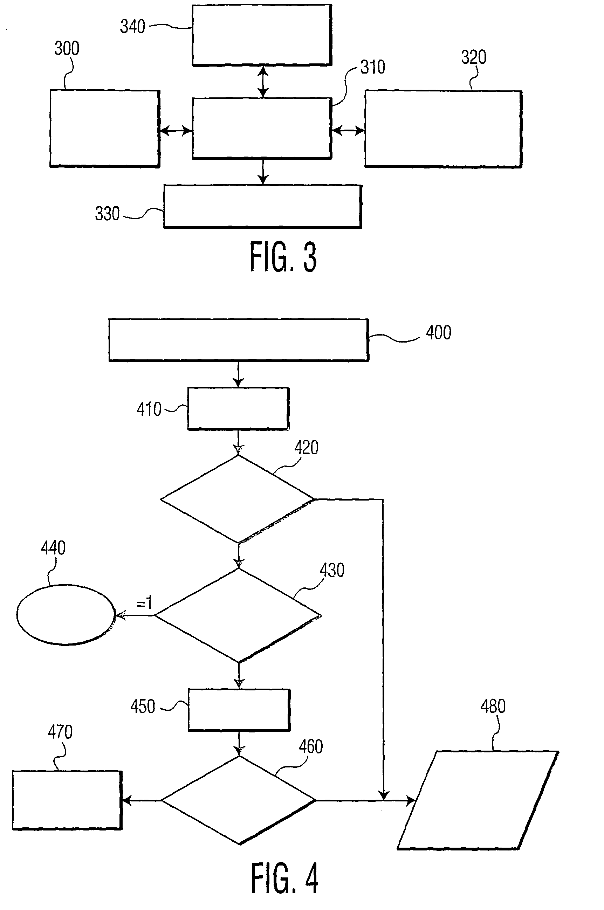

FIG. 3 is a simplified block diagram of an architecture which may be included in a QAP and each QSTAᵢ of the WLAN shown in FIG. 2. Both the QAP and each QSTAᵢ may include a memory 300, a CPU 310, a MAC sub-layer power management module 320, and a transmitter/receiver 330. Although the description may refer to terms commonly employed to describe specific computer systems, the description and concepts are meant to be equally applicable to other processing systems, including those having dissimilar architectures to that shown in FIG. 3. The transmitter/receiver is typically coupled to an antenna (not shown) to transmit and receive data. The CPU 310 is controlled by an operating system contained in the memory 300, accepts and delivers information to be transmitted and delivered from/to the information source/sink 340 by the transmitter/receiver 330, using the MAC synchronization management module 320 whereto embodiments of the present invention are applied to maintain synchronization of the beginning of a Service Period between a QAP and a non-AP QSTA.

Now, the principle of operation steps according to the present invention in maintaining synchronization between a QAP and a non-AP QSTA are explained hereafter.

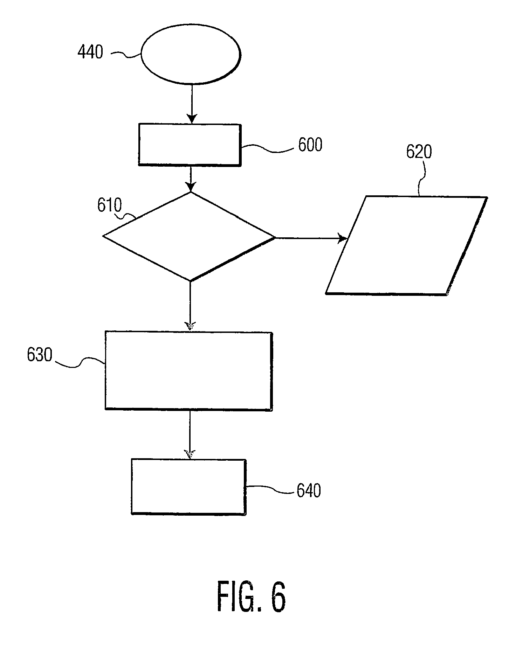

Referring now to FIG. 4, in a first preferred embodiment, the process at the non-AP QSTA is described. There are two possible cases; first the last downlink data frame is not the single frame during a Service Period (step 450); second the last downlink data frame is also the single frame during the Service Period (step 440 continued in Figure 6). At step 400 the non-AP QSTA receives a downlink data frame and transmits an ACK at step 410. If, at step 420, the non-AP QSTA determines if the data frame received is the last downlinked data frame, as indicated by the More Data field being cleared and if not the non-AP QSTA continues normal processing at step 480. If the non-AP QSTA determines at step 420 that the More Data bit is cleared then the non-AP QSTA determines at step 430 if the last downlinked data frame is also the single frame during the Service Period and if so performs the second embodiment at step 440. If at step 430 the non-AP QSTA determines that the last downlinked data frame is not the single frame during the Service Period then at step 450 the non-AP QSTA waits a DIFS period of time after the ACK transmission is finished. If the non-AP QSTA did not start receiving a frame from the QAP during the DIFS period, it may go to sleep mode at step 470 for a succeeding Minimum Service Interval period.

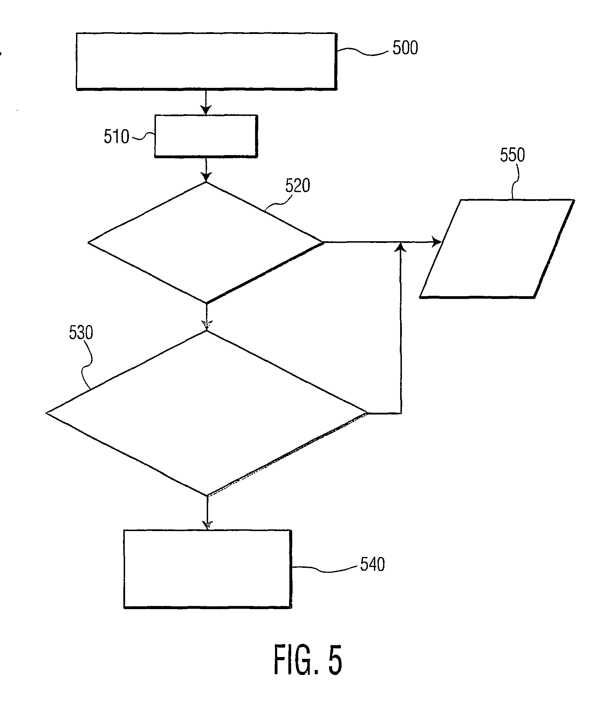

In a second preferred embodiment, the process at the QAP is described when the last downlink data frame is also the first and single frame during a Service Period. Referring now to FIG. 5, after sending the downlink data frame at step 500 , at step 510 the QAP waits SIFS and at step 520 the QAP checks if PHY-CCA.indication(busy) occurred during the slot following short inter-frame space (SIFS) and if not continues normal QAP processing at step 550. If, at step 520, the QAP determines that PHY-CCA.indication(busy) occurred during the slot following short inter-frame space (SIFS) then the QAP check, at step 530, that PHY-CCA.indication(busy) was followed by PHY-RXSTART indication or PHY-RXEND.indication prior to PHY-CCA.indication(idle), then at step 540 the QAP assumes that the downlink frame was successfully received by the non-AP QSTA (this is because it has started receiving a frame within a SIFS interval and can assume it is the ACK frame from the non-AP QSTA). Therefore, the QAP assumes that the Service Period started with the downlink frame. Otherwise, at step 550 the QAP assumes that the data frame was lost and the non-AP QSTA did not respond with the ACK frame, and therefore the Service Period didn't start.

Referring now to FIG. 4, after receiving the downlink data frame at step 400, as indicated by the More Data field being cleared, the non-AP QSTA responds with the ACK frame at step 410. At step 430 the non-AP QSTA then checks if the downlinked frame is the single frame in the Service Period and, if so, referring to FIG. 6, at step 600 remains awake during a DIFS period of time after the ACK transmission is finished. If, as checked at step 610, the non-AP QSTA does not receive a frame from the QAP during the DIFS period after the ACK transmission finished then the non-AP QSTA assumes that the QAP:
(a) received the ACK correctly, or
(b) the QAP decided not to retransmit.
In either case, both the QAP (at step 540 of FIG. 5) and the non-AP QSTA (at step 630 OF FIG. 6) assume that the Service Period started with the transmission of the downlink data frame, and hence the non-AP QSTA may go to sleep at step 630, after the DIFS period following the ACK transmission. Therefore, synchronization is maintained between the QAP and the non-AP QSTA.

## Claims

1. A method for maintaining synchronization of a Service Period between an access point, hereinafter called AP (220) and a station, hereinafter called STA (210) of a basic service set, hereinafter called BSS in a wireless local area network, hereinafter called WLAN (200), wherein the STA (210) performs the following steps:
receiving a last downlink data frame from the AP (220);
acknowledging receipt (410) of the last downlink data frame from the AP (220) by the STA (210);
determining if the Service Period started (430) with the receipt of the last downlink data frame;
waiting DIFS amount of time (450);
after waiting DIFS amount of time, optionally going into sleep mode (470) if the STA has not started to receive a frame from the AP.

2. The method as claimed in claim 1, wherein after going into sleep mode (470), remaining in sleep mode for a following Minimum Service Interval period.

3. A method for maintaining synchronization of a Service Period between an access point, hereinafter called AP (220) and a station, hereinafter called STA (210) of a basic service set, hereinafter called BSS in a wireless local area network, hereinafter called WLAN (200), wherein the AP (220) performs the following steps:
transmitting (500) a last downlink data frame to the STA (210);
waiting (510) SIFS amount of time after transmitting the last downlink data frame;
determining (520) if the Service Period started with the transmission of a last downlink data frame,
determining (530) if the downlink frame was successfully received by the STA (210);
assuming (540) that the Service Period did not start if the last downlink frame transmitted is not determined to be successfully received by the STA (210), i.e., it is lost;
assuming (550) the Service Period started if the last downlink frame transmitted is determined to be successfully received by the STA, (210).

4. The method of claim 3, wherein when determining (530) if the downlink frame was successfully received by the STA (210) determining that the downlink frame was successfully received by the STA (210) if PHY-CCA.indication(busy) occurs during a slot following SIFS, followed by PHY-RXSTART.indication or PHY-RXEND-indication prior to PHYCCA.indication(idle).

5. A method for maintaining synchronization of a Service Period between an access point, hereinafter called AP (220) performing the method as claimed in claim 3 and a station, hereinafter called STA (210) performing the method as claimed in claim 1 of a basic service set, hereinafter called BSS in a wireless local area network, hereinafter called WLAN (200), wherein for transmitting (500) the last downlink data frame by the AP (220) the More Data field is cleared, wherein for acknowledging receipt (410) of the last downlink data frame by the STA (210) the More Data field is checked whether it is cleared.

6. The method according to one of the claims 1-5, wherein the WLAN (200) is an IEEE 802.11e parameterized quality of service (QoS) basic service set (QBSS) WLAN, the AP (220) is a QoS-capable AP (QAP) and the STA (210) is a non-AP QoS-capable STA (QSTA).

7. A system having a station, hereinafter called STA, (210) and an access point synchronization management module for maintaining synchronization of a Service Period between an access point, hereinafter called AP (220) and the STA (210) of a basic service set in a wireless local area network, **characterized in that**:
the AP synchronization management module is adapted to determine if the Service Period started with the transmission of a last downlink data frame; and
a STA synchronization management module is adapted to determine if the Service Period starts with the transmission by the STA of an acknowledgement receipt (ACK) of a last downlink data frame from the AP (220);
a CPU (300) of the station (210) coupled to the STA synchronization management module for waiting a DIFS period of time after an acknowledgement ACK is sent and optionally putting the STA (210) into sleep mode for a predetermined amount of time if the STA (210) has not started to receive a frame from the AP (220) within the DIFS amount of time; and
a CPU (300) of the AP (220) coupled to said AP synchronization management module adapted to wait a SIFS amount of time after transmission of the last downlink data frame, when the last downlink data frame is the first and single data frame sent during the Service Period;
the CPU (300) of the AP (220) is adapted to determine if the downlink frame was successfully received by the STA and to assume one of:
i. the Service Period started if the last downlink frame transmitted was successfully received by the STA; and
ii. the Service Period did not start if the last downlink frame transmitted was not successfully received by the STA, i.e., is lost.

8. The system of claim 7, wherein said predetermined amount of time is a Minimum Service Interval period following the DIFS period.

9. The system of claim 7, wherein the CPU of the AP (220) is adapted to determine that the downlink frame was successfully received by the STA as follows: if PHY-CCA.indication (busy) occurs during a slot following SIFS, followed by PHY-RXSTART.indication or PHY-RXEND. indication prior to PHYCCA.indication(idle).

10. The system of claim 7, wherein the AP synchronization management module is adapted to clear the More Data field in the last downlink data frame; and
the STA synchronization management module is adapted to check whether the More Data field is cleared.

11. The system of claim 7, wherein the WLAN is an IEEE 802.11e parameterized quality of service basic service set WLAN, the AP is a QoS-capable AP and the STA is a non-AP QoS-capable STA.

## Patentansprüche

1. Verfahren zur Aufrechterhaltung der Synchronisation einer Service-Periode zwischen einem im Folgenden als AP (220) bezeichneten Zugriffspunkt (engl. Access Point) und einer im Folgenden als STA (210) bezeichneten Station eines im Folgenden als BSS bezeichneten Basic Service Set in einem im Folgenden als WLAN (200) bezeichneten drahtlosen lokalen Netzwerk, wobei die STA (210) die folgenden Schritte durchführt:
Empfangen eines letzten Downlink-Datenrahmens vom AP (220);
Quittieren des Empfangs (410) des letzten Downlink-Datenrahmens vom AP (220) durch die STA (210);
Feststellen, ob die Service-Periode mit dem Empfang des letzten Downlink-Datenrahmens begonnen hat (430);
Warten während des DIFS-Zeitintervalls (450);
nach dem Abwarten des DIFS-Zeitintervalls optional Eintreten in den Schlafmodus (470), wenn die STA nicht mit dem Empfang eines Rahmens vom AP begonnen hat.

2. Verfahren nach Anspruch 1, wobei nach dem Eintreten in den Schlafmodus (470) während einer folgenden minimalen Service-Intervall-Periode im Schlafmodus geblieben wird.

3. Verfahren zur Aufrechterhaltung der Synchronisation einer Service-Periode zwischen einem im Folgenden als AP (220) bezeichneten Zugriffspunkt (engl. Access Point) und einer im Folgenden als STA (210) bezeichneten Station eines im Folgenden als BSS bezeichneten Basic Service Set in einem im Folgenden als WLAN (200) bezeichneten drahtlosen lokalen Netzwerk, wobei der AP (220) die folgenden Schritte durchführt:
Senden (500) eines letzten Downlink-Datenrahmens an die STA (210);
Warten (510) während eines SIFS-Zeitintervalls nach der Übertragung des letzten Downlink-Datenrahmens;
Feststellen (520), ob die Service-Periode mit der Übertragung eines letzten Downlink-Datenrahmens begonnen hat;
Feststellen (530), ob der Downlink-Datenrahmen erfolgreich von der STA (210) empfangen wurde;
Annehmen (540), dass die Service-Periode nicht begonnen hat, wenn festgestellt wird, dass der übertragene letzte Downlink-Datenrahmen nicht erfolgreich von der STA (210) empfangen wurde, also verloren gegangen ist;
Annehmen (550), dass die Service-Periode begonnen hat, wenn festgestellt wird, dass der übertragene letzte Downlink-Datenrahmen erfolgreich von der STA (210) empfangen wurde.

4. Verfahren nach Anspruch 3, wobei beim Feststellen (530), ob der Downlink-Rahmen erfolgreich von der STA (210) empfangen wurde, festgestellt wird, dass der Downlink-Rahmen erfolgreich von der STA (210) empfangen wurde, wenn während eines Zeitschlitzes im Anschluss an das SIFS-Zeitintervall die PHY-CCA.Angabe (besetzt) auftritt, gefolgt von der PHY-RXSTART.Angabe oder der PHY-RXEND.Angabe vor der PHY-CCA.Angabe (Leerlauf).

5. Verfahren zur Aufrechterhaltung der Synchronisation einer Service-Periode zwischen einem im Folgenden als AP (220) bezeichneten Zugriffspunkt (engl. Access Point), der das Verfahren nach Anspruch 3 ausführt, und einer im Folgenden als STA (210) bezeichneten und das Verfahren nach Anspruch 1 ausführenden Station eines im Folgenden als BSS bezeichneten Basic Service Set in einem im Folgenden als WLAN (200) bezeichneten drahtlosen lokalen Netzwerk, wobei zum Übertragen (500) des letzten Downlink-Rahmens durch den AP (220) das More-Data-Feld gelöscht wird, wobei zur Quittierung des Empfangs (410) des letzten Downlink-Datenrahmens durch die STA (210) geprüft wird, ob das More-Data-Feld gelöscht wurde.

6. Verfahren nach einem der Ansprüche 1 bis 5, wobei das WLAN (200) ein Basic-Service-Set- (QBSS) WLAN mit nach IEEE 802.11e parametrisierter Dienstgüte (QoS) ist, wobei der AP (220) ein dienstgütefähiger AP (QAP) ist und die STA (210) eine Non-AP dienstgütefähige STA (QSTA) ist.

7. System mit einer im Folgenden als STA (210) bezeichneten Station und einem Zugriffspunkt-Synchronisationsmanagement-Modul zur Aufrechterhaltung der Synchronisation einer Service-Periode zwischen einem im Folgenden als AP (220) bezeichneten Zugriffspunkt und einer der STA (210) eines Basic Service Set in einem drahtlosen lokalen Netzwerk, **dadurch gekennzeichnet, dass**
das AP-Synchronisationsmanagement-Modul dafür eingerichtet ist festzustellen, ob die Service-Periode mit der Übertragung eines letzten Downlink-Datenrahmens begonnen hat; und
ein STA-Synchonisationsmanagement-Modul dafür eingerichtet ist festzustellen, ob die Service-Periode mit der Übertragung einer Quittierung (ACK) durch die STA für den Empfang eines letzten Downlink-Datenrahmens vom AP (220) beginnt;
eine CPU (300) der mit dem STA-Synchronisationsmanagement-Modul gekoppelten Station (210) eine DIFS-Zeitspanne nach dem Senden einer Quittierung ACK abwarten soll und die STA (210) optional für eine bestimmte Zeitdauer in den Schlafmodus versetzen soll, wenn die STA (210) nicht innerhalb der DIFS-Zeitspanne mit dem Empfang eines Rahmens vom AP (220) begonnen hat; und
eine CPU (300) des mit dem genannten AP-Synchronisationsmanagement-Modul gekoppelten AP (220) dafür eingerichtet ist, während einer SIFS-Zeitspanne nach der Übertragung des letzten Downlink-Datenrahmens zu warten, wenn der letzte Downlink-Datenrahmen der erste und einzige Datenrahmen ist, der während der Service-Periode gesendet wird;
die CPU (300) des AP (220) dafür eingerichtet ist festzustellen, ob der Downlink-Datenrahmen erfolgreich von der STA empfangen wurde und davon auszugehen, dass entweder:
i. die Service-Periode begonnen hat, wenn der letzte übertragene Downlink-Datenrahmen erfolgreich durch die STA empfangen wurde; oder
ii. die Service-Periode nicht begonnen hat, wenn der letzte übertragene Downlink-Datenrahmen nicht erfolgreich durch die STA empfangen wurde, d.h. verloren gegangen ist.

8. System nach Anspruch 7, wobei die genannte vorgegebene Zeitspanne eine minimale Service-Intervall-Periode im Anschluss an die DIFS-Periode ist.

9. System nach Anspruch 7, wobei die CPU des AP (220) dafür eingerichtet ist, wie folgt festzustellen, dass der Downlink-Rahmen erfolgreich von der STA empfangen wurde: wenn die PHY.CCA.Angabe (besetzt) während eines Zeitschlitzes im Anschluss an das SIFS-Intervall auftritt, gefolgt von der PHY.RXSTART.Angabe oder der PHY-RXEND.Angabe vor der PHYCCA.Angabe (Leerlauf).

10. System nach Anspruch 7, wobei das AP-Synchronisationsmanagement-Modul dafür eingerichtet ist, das More-Data-Feld in dem letzten Downlink-Datenrahmen zu löschen; und
das STA-Synchronisationsmanagement-Modul dafür eingerichtet ist zu prüfen, ob das More-Data-Feld gelöscht ist.

11. System nach Anspruch 7, wobei das WLAN ein Basic-Service-Set-WLAN mit nach IEEE 802.11e parametrisierter Dienstgüte ist, der AP ein dienstgütefähiger AP ist und die STA eine Non-AP dienstgütefähige STA ist.

## Revendications

1. Procédé pour maintenir la synchronisation d'une période de service entre un point d'accès, appelé ci-dessous AP (220), et une station, appelée ci-dessous STA (210), d'un ensemble de services de base, appelé ci-dessous BSS, dans un réseau local sans fil, appelé ci-dessous WLAN (200), procédé dans lequel la STA (210) exécute les étapes suivantes :
recevoir une dernière trame de données de liaison descendante en provenance de l'AP (220);
la STA (210) acquitte (410) la dernière trame de données de liaison descendante en provenance de l'AP (220);
déterminer si la période de service a commencé (430) avec la réception de la dernière trame de données de liaison descendante;
attendre pendant une période de temps DIFS (450);
après avoir attendu pendant une période de temps DIFS, à titre facultatif, passer en mode de veille (470) si la STA n'a pas commencé à recevoir une trame en provenance de l'AP.

2. Procédé selon la revendication 1, dans lequel, après être passée en mode de veille (470), la STA reste dans le mode de veille pendant une période d'intervalle de service minimum qui suit.

3. Procédé pour maintenir la synchronisation d'une période de service entre un point d'accès, appelé ci-dessous AP (220), et une station, appelée ci-dessous STA (210), d'un ensemble de services de base, appelé ci-dessous BSS, dans un réseau local sans fil, appelé ci-dessous WLAN (200), procédé dans lequel l'AP (220) exécute les étapes suivantes :
transmettre (500) une dernière trame de données de liaison descendante à la STA (210);
attendre (510) pendant une période de temps SIFS après avoir transmis la dernière trame de données de liaison descendante;
déterminer (520) si la période de service a commencé avec la transmission d'une dernière trame de données de liaison descendante;
déterminer (530) si la trame de liaison descendante a été reçue avec succès par la STA (210);
supposer (540) que la période de service n'a pas commencé s'il n'est pas établi que la dernière trame de liaison descendante transmise a été reçue avec succès par la STA (210), c'est-à-dire si elle est perdue;
supposer (550) que la période de service a commencé s'il est établi que la dernière trame de liaison descendante transmise a été reçue avec succès par la STA (210).

4. Procédé selon la revendication 3, dans lequel, lorsque l'on détermine (530) si la trame de liaison descendante a été reçue avec succès par la STA (210), il est établi que la trame de liaison descendante a été reçue avec succès par la STA (210) si PHY-CCA.indication(busy) survient pendant un intervalle de temps qui suit un intervalle SIFS, suivi par PHY-RXSTART.indication ou PHY-RXEND.indication avant PHY-CCA.indication(idle).

5. Procédé pour maintenir la synchronisation d'une période de service entre un point d'accès, appelé ci-dessous AP (220), exécutant le procédé selon la revendication 3, et une station, appelée ci-dessous STA (210), exécutant le procédé selon la revendication 1, d'un ensemble de services de base, appelé ci-dessous BSS, dans un réseau local sans fil, appelé ci-dessous WLAN (200), procédé dans lequel, pour la transmission (500) de la dernière trame de données de liaison descendante par l'AP (220), le champ More Data est mis à zéro, dans lequel, en vue de l'acquittement (410) de la dernière trame de données de liaison descendante par la STA (210), le champ More Data est contrôlé pour savoir s'il est mis à zéro.

6. Procédé selon l'une des revendications 1-5, dans lequel le WLAN (200) est un WLAN IEEE 802.1 le offrant un ensemble de services de base (QBSS) de la qualité de service (QoS) paramétrée, l'AP (220) est un AP capable d'offrir la QoS (QAP) et la STA (210) est une STA capable d'offrir la QoS (QSTA), non-AP.

7. Système ayant une station, appelée ci-dessous STA (210), et un module de gestion de la synchronisation de point d'accès pour maintenir la synchronisation d'une période de service entre un point d'accès, appelé ci-dessous AP (220), et la STA (210) d'un ensemble de services de base dans un réseau local sans fil, système **caractérisé en ce que** :
le module de gestion de la synchronisation de point d'accès est adapté pour déterminer si la période de service a commencé par la transmission d'une dernière trame de données de liaison descendante; et **en ce que**
un module de gestion de la synchronisation de STA est adapté pour déterminer si la période de service commence par la transmission par la STA d'un accusé de réception (ACK) d'une dernière trame de données de liaison descendante en provenance de l'AP (220);
une CPU (300) de la station (210) est couplée au module de gestion de la synchronisation de STA pour attendre pendant une période de temps DIFS après qu'un accusé de réception ACK a été envoyé et, de manière facultative, pour mettre la STA (210) en mode de veille pendant une période de temps prédéterminée si la STA (210) n'a pas commencé à recevoir une trame en provenance de l'AP (220) pendant la période de temps DIFS; et
une CPU (300) de l'AP (220) est couplée audit module de gestion de la synchronisation d'AP adaptée pour attendre pendant une période de temps SIFS après la transmission de la dernière trame de données de liaison descendante, lorsque la dernière trame de données de liaison descendante est la première et seule trame de données envoyée pendant la période de service;
la CPU (300) de l'AP (220) est adaptée pour déterminer si la trame de liaison descendante a été reçue avec succès par la STA et pour supposer :
i. soit que la période de service a commencé si la dernière trame de liaison descendante transmise a été reçue avec succès par la STA;
ii. soit que la période de service n'a pas commencé si la dernière trame de liaison descendante transmise n'a pas été reçue avec succès par la STA, c'est-à-dire si elle est perdue.

8. Système selon la revendication 7, dans lequel ladite période de temps prédéterminée est une période d'intervalle de service minimum qui suit la période DIFS.

9. Système selon la revendication 7, dans lequel la CPU de l'AP (220) est adaptée pour déterminer que la trame de liaison descendante a été reçue avec succès par la STA comme suit : si PHY-CCA.indication(busy) survient pendant un intervalle de temps qui suit un intervalle SIFS, suivi par PHY-RXSTART.indication ou PHY-RXEND.indication avant PHY-CCA.indication(idle).

10. Système selon la revendication 7, dans lequel le module de gestion de la synchronisation d'AP est adapté pour mettre à zéro le champ More Data dans la dernière trame de données de liaison descendante; et
le module de gestion de la synchronisation de STA est adapté pour vérifier si le champ More Data est mis à zéro.

11. Système selon la revendication 7, dans lequel le WLAN est un WLAN IEEE 802.11e offrant un ensemble de services de base de la qualité de service paramétrée, l'AP est un AP capable d'offrir la QoS et la STA est une STA capable d'offrir la QoS, non-AP.
